# EUROPEAN PATENT SPECIFICATION

(11) **EP 4 067 718 B1**
(45) Date of publication and mention of the grant of the patent: **11.09.2024**
(21) Application number: 21425013.6
(22) Date of filing: 29.03.2021
(51) Int. Cl.: F28F 11/02, F28F 9/02, F16L 15/04, F16L 15/00, F16B 43/00, F16L 19/00, F16L 55/11

(54) **SEALING DEVICE FOR BORES OF A HEAT EXCHANGER**
DICHTUNGSVORRICHTUNG FÜR BOHRUNGEN EINES WÄRMETAUSCHERS
DISPOSITIF D'ÉTANCHÉITÉ POUR LES ALÉSAGES D'UN ÉCHANGEUR DE CHALEUR

(43) Date of publication of application: 05.10.2022
(73) Proprietor: ALFA LAVAL OLMI S.p.A., 24040 Suisio (BG) (IT)
(72) Inventor: Colombo, Marco Maria, 24040 Suisio (BG) (IT); Milesi, Luca, 24040 Suisio (BG) (IT)
(74) Representative: Alfa Laval Attorneys

(56) References cited:
- EP-A1- 1 760 381
- US-A- 2 325 024
- US-A- 3 850 456
- US-A- 4 783 100
- US-B2- 7 059 612

## Description

### Field of the invention

The present invention refers in general to a sealing device for bores of a heat exchanger and, more specifically but not exclusively, to a sealing device designed for sealing the bores of the plug-header of an air cooler heat exchanger.

### Background of the invention

An air cooler equipment is a particular type of heat exchanger which is usually equipped with a tube bundle with headers on both ends of the tubes. Headers have the purpose of distributing the fluid from the piping to the tubes of the heat exchanger. A vast majority of the headers are of the plug type. This means that, for each tube connected to one wall or sheet (that is, the tube-sheet) of the header there is a corresponding bore obtained on the opposite wall or sheet (that is, the plug-sheet) of said header. The plug-sheet bores are used in the manufacturing process of the heat exchanger, for example to obtain the tube-to-tube-sheet joints by welding, or for tube maintenance activities.

Once the tube-to-tube-sheet joints have been made, each plug-sheet bore is typically sealed with a respective sealing device comprising at least one plug and at least one gasket. If the sealing devices are removed from the header, the respective plug-sheet bores therefore remain available for further inspection, maintenance and/or repair operations on the heat exchanger (for example to have access to the tube-sheet from the plug-sheet side for inspection, cleaning or plugging of individual tubes).

An air cooler equipment can operate in critical conditions for pressure and kind of fluid content, as defined in API 661 Standard. Therefore, no leakage is admitted through the plug-sheet bores and the respective sealing devices. Additionally, due to process reasons, the conventionally adopted gasket of each sealing device is usually a solid metallic one. As a consequence, to avoid leakage and since a limited plastic deformation of the gasket is allowed, a full and perfect contact is required between the gasket and the respective plug.

The gasket typically needs a centring shoulder in the plug to be kept in its sealing position. There are several configurations according to the prior art for keeping the gasket in its sealing position with respect to the plug.

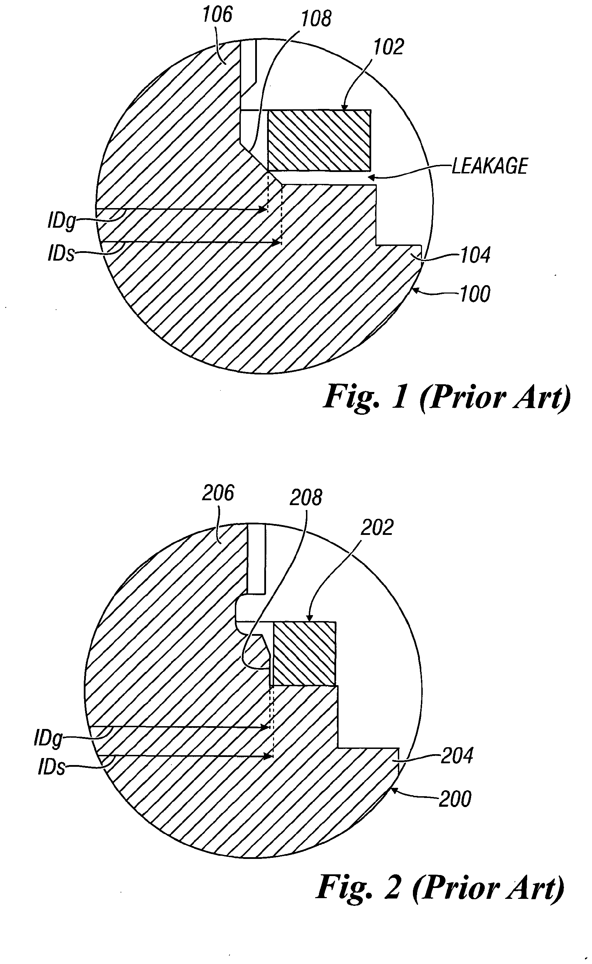

A first configuration according to the prior art is shown in figure 1. In figure 1 an enlarged cross-sectional view of a sealing device for bores, comprising a plug 100 and a gasket 102, is shown. The gasket 102 is an annular gasket and it is designed to be inserted around the threaded shank 106 of the plug 100. A conical transition wall 108 is obtained between the head 104 and the shank 106 of the plug 100. This conical transition wall 108 forms a centering shoulder for the gasket 102. However, this conical transition wall 108 does not allow a perfect centering and seating of the gasket 102. In other words, this conical transition wall 108 does not allow a full contact between the gasket 102 and the head surface 104 of the plug 100, thus forming a point of leakage. This is due to the fact that, even if the internal diameter IDg of the gasket 102 coincides with the internal diameter IDs of the shoulder 108, there is not a secure surface to keep in place the gasket 102. More specifically, in case of the conical transition wall 108, the internal diameter IDg of the gasket 102 is not confined by the shoulder 108, and thus the gasket 102 can fit out of center and a gap (that is, a point of leakage) between the gasket 102 and the head 104 of the plug 100 is formed.

A second configuration according to the prior art is shown in figure 2. In figure 2 an enlarged cross-sectional view of another sealing device for bores, comprising a plug 200 and a gasket 202, is shown. The gasket 202 is once again an annular gasket and it is designed to be inserted around the threaded shank 206 of the plug 200. A cylindrical transition wall 208, obtained between the head 204 and the shank 206 of the plug 200, forms the centering shoulder for the gasket 202. In the second configuration shown in figure 2 the internal diameter IDg of the gasket 202 can almost coincide with the internal diameter IDs of the shoulder 208, thus avoiding the leakage. However, the second configuration is shown in figure 2 is merely a theoretical configuration, since the shoulder 208 cannot be machined with root zero radius, that is, the radius at the root between the head 204 and the shank 206 (lOg cylindrical centering shoulder) of the plug 200. This is due to manufacturing reasons.

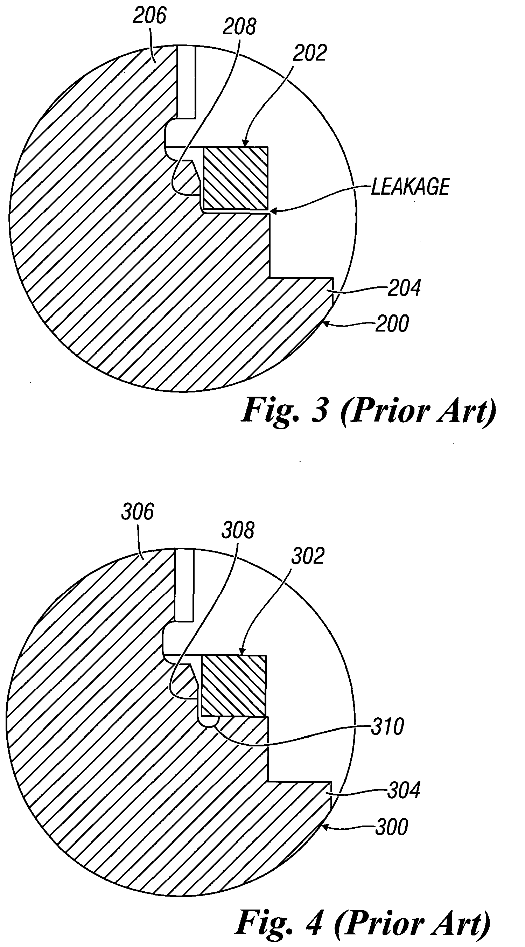

The real configuration of a cylindrical centering shoulder is thus shown in figure 3. In this real configuration a root transition radius (of about 0.5 mm) is present between the head 204 and the shank 206 of the plug 200. This root transition radius results in a non-perfect gasket 202 seating. In other words, a gap (that is, a point of leakage) between the gasket 202 and the head 204 of the plug 200 may still be present due to this root transition radius. The configuration of figure 3, even if better than the first configuration of figure 1, is not fully safe: the root transition radius can interfere with the internal edge of the gasket 202, affecting the contact between the gasket 202 and the horizontal surface of the head 204 of the plug 200 and, consequently, the tightness.

A third configuration according to the prior art is shown in figure 4. In figure 4 an enlarged cross-sectional view of a further sealing device for bores, comprising a plug 300 and a gasket 302, is shown. The gasket 302 is once again an annular gasket and is designed to be inserted around the threaded shank 306 of the plug 300. A cylindrical transition wall 308 is still obtained between the head 304 and the shank 306 of the plug 300 and forms the centering shoulder for the gasket 302.

To avoid the root transition radius of figure 3, a groove 310 is obtained in the head 304 of the plug 300. This groove allows a gasket edge accommodation, thus eliminating the gap between the gasket 302 and the head 304 of the plug 300. The seating problems of the previous configurations are solved, but the groove 310 causes a reduction of the gasket seat surface width. Typically, the radius of the groove 310 is of about 0.5 mm and the width of the gasket 302 span between 2 to 3 mm. In this case, the reduction of the gasket 302 contact area due to the groove 310 is of about 30% to 50%.

US 3 850 456 A discloses a fitting, US 4 783 100 A discloses a swivel plumbing joint, EP 1 760 381 A1 discloses a screwed socket connection and US 7 059 612 B2 discloses a tube joint according to prior art.

### Summary of the invention

One object of the present invention is therefore to provide a sealing device for bores of a heat exchanger which is capable of resolving the drawbacks of the prior art in a simple, inexpensive and particularly functional manner.

In detail, one object of the present invention is to provide a sealing device for bores of a heat exchanger which allows a complete seating of the gasket in its seat obtained in the plug, without any reduction in contact width, for a perfect gasket sealing.

Another object of the present invention is to provide a sealing device for bores of a heat exchanger which does not require complex and/or specific machining operations for its manufacture.

These objects are achieved according to the present invention by providing a sealing device for bores of a heat exchanger as set forth in the attached claims.

Further features of the invention are underlined by the dependent claims, which are an integral part of the present description.

The sealing device for bores according to the present invention is designed in particular for sealing bores obtained on a header portion of a heat exchanger. The sealing device comprises at least one bolt-type plug, which is provided with a head and with a substantially cylindrical shank. The shank has a threaded cylindrical surface which is substantially parallel to a central rotation axis of the plug. The plug is designed to be inserted into a corresponding bore in a threaded coupling.

The sealing device further comprises at least one annular gasket, which is provided with a central through hole having a predefined internal diameter. The gasket is designed to be axially inserted around the shank of the plug to make seal between the head of the plug and the bore.

The plug is provided with at least one annular seat for accommodating the gasket, wherein said seat is arranged at a root connection between the head of the plug and the shank of the plug. The seat comprises:
- a radial annular contact surface which is substantially flat in the radial direction, which is obtained on a portion of the head facing the shank and which is substantially perpendicular to the central rotation axis, wherein said radial annular contact surface is designed to be in contact with a radially oriented annular contact portion of the gasket; and
- an axial annular contact surface which is substantially flat in the axial direction, which is obtained on a root portion of the shank at the radial annular contact surface and which is substantially parallel to the central rotation axis, wherein said axial annular contact surface has an internal diameter which is substantially equal to the internal diameter of the central through hole, and wherein the axial annular contact surface is designed to form an axial centering shoulder for the gasket.

Advantageously, the axial annular contact surface is provided with at least one circumferential groove having an internal diameter which is smaller than the internal diameter of the axial annular contact surface. Preferably, the circumferential groove is obtained on the axial annular contact surface at a joining portion between the radial annular contact surface and said axial annular contact surface. Also preferably, the circumferential groove has a curve-shaped concave cross-section profile. Even more preferably, the circumferential groove has a semicircular concave cross-section profile. Also preferably, the circumferential groove is tangential to the radial annular contact surface.

According to a preferred aspect of the present invention, the radial width of the radial annular contact surface is equal or greater than the radial width of the radially oriented annular contact portion of the gasket. Additionally, the axial thickness of the inner annular surface of the gasket hole may be preferably greater than the axial length of the circumferential groove.

The threaded cylindrical surface of the substantially cylindrical shank has an overall diameter which is smaller than the internal diameter of the axial annular contact surface. A narrowed shank portion may be interposed between said threaded cylindrical surface and the axial annular contact surface. Additionally, a frustoconical shank fitting portion may be interposed between said narrowed shank portion and the axial annular contact surface. The frustoconical shank fitting portion has a smaller base which connects to said narrowed shank portion and which has a smaller base diameter which is substantially equal to the overall diameter of the threaded cylindrical surface, whereas the greater base of the frustoconical shank fitting portion connects to the axial annular contact surface and has a greater base diameter which is substantially equal to the internal diameter of said axial annular contact surface.

The gasket is preferably made of a metallic material.

A method for assembling the sealing device described so far inside a bore obtained on a header portion of a heat exchanger is furthermore disclosed. The method comprises the steps of:
- providing a through hole in the header portion, in order to obtain a bore having a diameter which is substantially equal to the overall diameter of the threaded cylindrical surface of the shank;
- providing an internal thread in the bore;
- inserting the shank into the central through hole of the gasket, in such a way that the radially oriented annular contact portion of the gasket comes into contact with the radial annular contact surface of the annular seat and the inner annular surface of the gasket hole comes into contact with the axial annular contact surface of said annular seat;
- inserting the plug into the bore by screwing the shank into the internal thread of the bore, in such a way that the gasket comes into contact with the header portion; and
- applying a tightening torque to the plug head, in such a way that the radially oriented annular contact portion of the gasket is pushed in full and sealing contact with the radial annular contact surface of the annular seat.

The method further comprises the optional step of enlarging the entrance of the bore, in order to obtain an enlarged bore portion having a flat peripheral annular surface which is perpendicular to the bore axis and having a diameter which is substantially equal to, or slightly greater than, the overall diameter of the gasket, in such a way that the gasket is fitted into the enlarged bore portion when the shank is screwed into the internal thread of the bore.

### Brief description of the drawings

The features and advantages of a sealing device for bores of a heat exchanger according to the present invention will be clearer from the following exemplifying and non-limiting description, with reference to the enclosed schematic drawings, in which:
Figure 1 is an enlarged cross-sectional view of a first configuration of a sealing device for bores of a heat exchanger according to the prior art;
Figure 2 is an enlarged cross-sectional view of a second theoretical configuration of a sealing device for bores of a heat exchanger according to the prior art;
Figure 3 is an enlarged cross-sectional view of a second real configuration of a sealing device for bores of a heat exchanger according to the prior art;
Figure 4 is an enlarged cross-sectional view of a third configuration of a sealing device for bores of a heat exchanger according to the prior art;
Figure 5 is a side view of the components of a preferred embodiment of the sealing device for bores of a heat exchanger according to the present invention;
Figure 6 is a top view of the plug of the sealing device of figure 5;
Figure 7 is an enlarged view of a portion of the plug of the sealing device of figure 5; and
Figure 8 is an even more enlarged cross-sectional view of the plug portion of figure 7, wherein the gasket too is shown.

### Detailed description of the invention

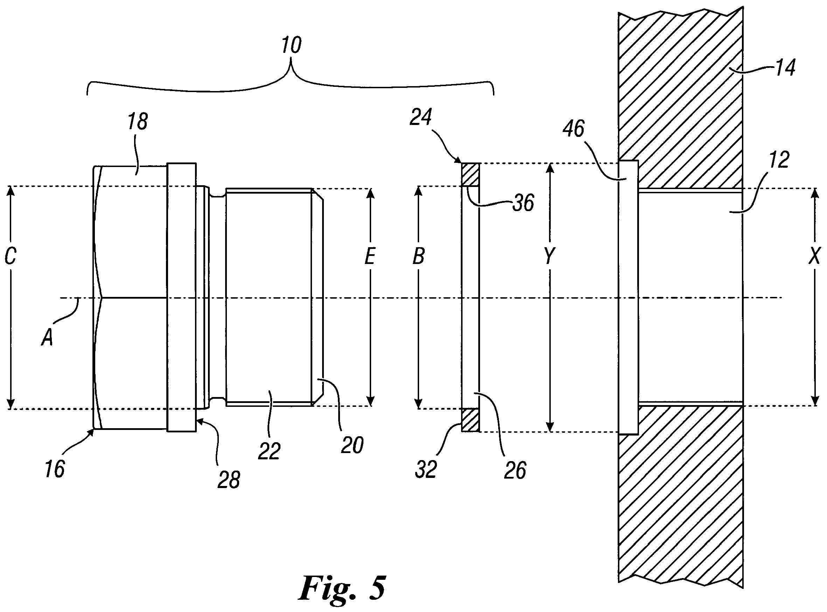

With reference to the figures, a preferred embodiment of a sealing device for bores of a heat exchanger according to the present invention is shown. The sealing device is indicated as a whole with reference numeral 10. The sealing device 10 is designed to seal a corresponding bore, in particular a bore obtained on the header of a heat exchanger. More specifically but not exclusively, the sealing device 10 is designed to seal a corresponding bore 12 obtained on a header portion 14 of an air cooler heat exchanger, as shown in figure 5. It should be noted that, in order to properly receive the sealing device 10, the bore 12 should be specifically machined, as will be better explained hereinafter with reference to the assembly method of said sealing device 10.

As shown in particular in figures 5 to 8, the sealing device 10 comprises at least one bolt-type plug 16, which is conventionally provided with a head 18 and with a substantially cylindrical shank 20. The shank 20 has a threaded cylindrical surface 22 which is substantially parallel to a central rotation axis A of the plug 16. The plug 16 is thus designed to be inserted into a corresponding bore 12 in a threaded coupling.

The sealing device 10 also comprises at least one annular gasket 24, which is provided with a central through hole 26 having a predefined internal diameter B. The gasket 24 is thus designed to be axially inserted around the shank 20 of the plug 16 to make seal between the head 18 of the plug 16 and the bore 12 once the sealing device 10 has been properly inserted into said bore 12. The gasket 24 is preferably made of a metallic material. All metals can be adopted. Usually adopted metallic materials are carbon steel, stainless steel, nickel alloys and titanium. It should be noted that harder the gasket material, greater the need to have a perfect mating between the gasket 24 and its seats.

The plug 16 is provided with at least one annular seat 28 for accommodating the gasket 24. This annular seat 28 is arranged at a root connection between the head 18 of the plug 16 and the shank 20 of the plug 16. More specifically, this annular seat 28 comprises a radial annular contact surface 30, which is substantially flat in the radial direction and which is obtained on a lower portion of the head 18 of the plug 16, that is, the portion of the head 18 facing the shank 20. The radial annular contact surface 30 of the annular seat 28 is substantially perpendicular to the central rotation axis A of the plug 16. The radial annular contact surface 30 of the annular seat 28 is thus designed to be in contact with a radially oriented annular contact portion 32 of the gasket 24, that is, the portion of the gasket 24 which must guarantee the seal properties.

The annular seat 28 also comprises an axial annular contact surface 34 which is substantially flat in the axial direction and which is obtained on a root portion of the shank 20 at the radial annular contact surface 30 of the annular seat 28. The axial annular contact surface 34 of the annular seat 28 is substantially parallel to the central rotation axis A of the plug 16. In other words, the radial annular contact surface 30 and the axial annular contact surface 34 of the annular seat 28 are perpendicular to each other. The axial annular contact surface 34 of the annular seat 28 has an internal diameter C which is substantially equal to the internal diameter B of the central through hole 26 of the gasket. Therefore, the axial annular contact surface 34 of the annular seat 28 is designed to form an axial centering shoulder for the gasket 24, preferably through a direct contact between the inner annular surface 36 of the hole 26 and said axial annular contact surface 34 of the annular seat 28.

It should be pointed out that, in the present description and in the following claims, the term "axial" identifies any item which is parallel to the central rotation axis A of the plug 16. Similarly, the term "radial" identifies any item which is perpendicular to the central rotation axis A of the plug 16.

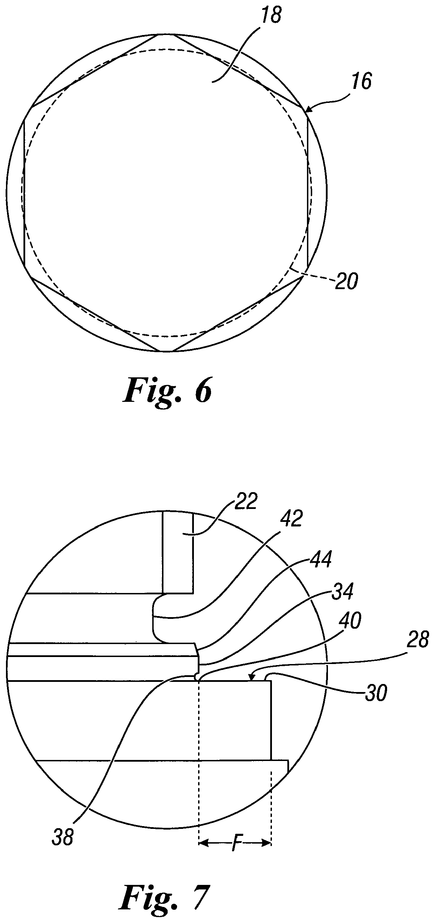

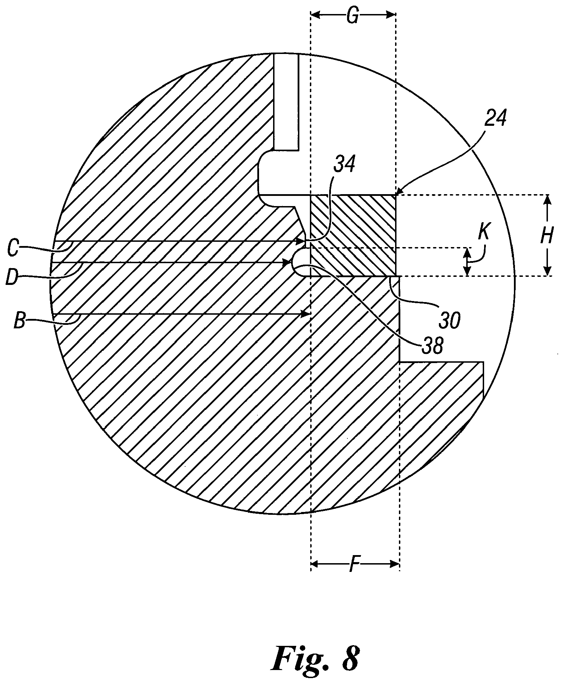

According to the invention, as shown in figure 7 and in more detail in figure 8, the axial annular contact surface 34 of the annular seat 28 is provided with at least one circumferential groove 38 having an internal diameter D which is smaller than the internal diameter C of said axial annular contact surface 34. With "internal diameter" D of the circumferential groove 38 the diameter of the deepest portion of said circumferential groove 38 dug in the axial annular contact surface 34 is intended, as shown for example in figure 8. This configuration of the annular seat 28 is an improvement of the prior art configuration shown in figure 4. The purpose of this configuration is to allow the seating of the gasket 24 avoiding the problem of contact surface reduction.

Preferably, the circumferential groove 38 is obtained on the axial annular contact surface 34 of the annular seat 28 at a joining portion 40 between the radial annular contact surface 30 and said axial annular contact surface 34. In other words, this joining portion 40 substantially coincides with the portion of the configuration shown in figure 3 wherein there is the root transition radius between axial and radial annular contact surfaces. Therefore, the fact that the circumferential groove 38 is obtained at this joining portion 40 allows complete seating of the gasket 24 in the annular seat 28, without any reduction in gasket contact width, for fa perfect gasket sealing.

Preferably, as shown for example in figure 8, the circumferential groove 38 has a curve-shaped concave cross-section profile. More preferably, for ease of machining, the circumferential groove 38 has a semicircular concave cross-section profile which causes said circumferential groove 38 to be tangential to the radial annular contact surface 30. In other words, as shown in figure 8, there is preferably a continuity between the radial annular contact surface 30, which is flat, and the circumferential groove 38 which, starting from said flat surface 30, is dug in the axial annular contact surface 34.

To ensure a full contact between the gasket 24 and the radial annular contact surface 30 of the annular seat 28, the radial width F of said radial annular contact surface 30 is preferably equal or greater than the radial width G of the radially oriented annular contact portion 32 of the gasket 24, that is, the sealing portion of said gasket 24. For a similar sealing purpose, the axial thickness H of the inner annular surface 36 of the gasket hole 26, that is, the overall thickness of the gasket 24 measured along the central rotation axis A, is advantageously greater than the axial length K of the circumferential groove 38.

Preferably, the threaded cylindrical surface 22 of the substantially cylindrical shank 20 has an overall diameter E which is smaller than the internal diameter C of the axial annular contact surface 34 of the annular seat 28. This feature has the purpose of allowing an easy axial movement of the gasket 24 around the shank 20 for the insertion of said gasket 24 into its annular seat 28 at the root of said shank 20. Also preferably, a narrowed shank portion 42 is interposed between the threaded cylindrical surface 22 of the shank 20 and the axial annular contact surface 34 of the annular seat 28. For the same purpose as above, a frustoconical shank fitting portion 44 can be interposed between the narrowed shank portion 42 and the axial annular contact surface 34 of the annular seat 28. More specifically, the frustoconical shank fitting portion 44 has a smaller base which connects to said narrowed shank portion 42 and which has a smaller base diameter which is substantially equal to the overall diameter E of the threaded cylindrical surface 22, whereas the greater base of said frustoconical shank fitting portion 44 connects to the axial annular contact surface 34 of the annular seat 28 and has a greater base diameter which is substantially equal to the internal diameter C of said axial annular contact surface 34.

With specific reference to figure 5, the method for assembling the sealing device 10 described so far inside a bore 12 obtained on a header portion 14 of a heat exchanger is as follows. This assembling method initially requires a specific step of providing a through hole in said header portion 14, in order to obtain a bore 12 having a diameter X which is substantially equal to the overall diameter E of the threaded cylindrical surface 22 of the shank 20. An internal thread in the bore 12 is to be provided. Preferably, to improve the sealing capability of the gasket 24 in the assembled configuration of the sealing device 10, the entrance of the bore 12 can be enlarged, in order to obtain an enlarged bore portion 46 having a flat peripheral annular surface which is perpendicular to the bore axis and having a diameter Y which is substantially equal to, or slightly greater than, the overall diameter of the gasket 24.

Once the bore 12 and possibly the respective enlarged bore portion 46 have been completed, the shank 20 of the plug 16 is inserted into the central through hole 26 of the gasket 24, in such a way that the radially oriented annular contact portion 32 of the gasket 24 comes into contact with the radial annular contact surface 30 of the annular seat 28 and the inner annular surface 36 of the gasket hole 26 comes into contact with the axial annular contact surface 34 of said annular seat 28, except for a minimum gap to permit assembly. Actually, the manufacturing tolerances between the inner annular surface 36 of the gasket hole 26 and the axial annular contact surface 34 of the annular seat 28 have to be very narrow, to maintain as small as possible the gap between said two surfaces.

The plug 16, with the properly centered gasket 24, is then inserted into the bore 12 by screwing the shank 20 into the internal thread of said bore 12, in such a way that the gasket 24 comes into contact with the header portion 14 and is fitted into its corresponding enlarged bore portion 46 if said enlarged bore portion 46 is available. A tightening torque is finally applied to the plug head 18, in such a way that the radially oriented annular contact portion 32 of the gasket 24 is pushed in full and sealing contact with the radial annular contact surface 30 of the annular seat 28.

It is thus seen that the sealing device for bores of a heat exchanger according to the present invention achieve the previously outlined objects.

The sealing device for bores of a heat exchanger of the present invention thus conceived is susceptible in any case of numerous modifications and variants, all falling within the same inventive concept; in addition, all the details can be substituted by technically equivalent elements. In practice, the materials used, as well as the shapes and size, can be of any type according to the technical requirements.

The scope of protection of the invention is therefore defined by the enclosed claims.

### List of references

10: sealing device;
12: bore;
14: heat exchanger header;
16: bolt-type plug;
18: plug head;
20: plug shank;
22: shank threaded cylindrical surface;
24: annular gasket;
26: gasket central through hole;
28: plug annular seat;
30: seat radial annular contact surface;
32: gasket radially oriented annular contact portion;
34: seat axial annular contact surface;
36: hole inner annular surface;
38: circumferential groove;
40: radial annular contact surface and axial annular contact surface joining portion;
42: narrowed skank portion;
44: frustoconical shank fitting portion;
46: enlarged bore portion;
A: plug central rotation axis;
B: hole internal diameter;
C: axial annular contact surface internal diameter;
D: circumferential groove internal diameter;
E: threaded cylindrical surface overall diameter;
F: radial annular contact surface width;
G: radially oriented annular contact portion width;
H: gasket axial thickness;
K: groove axial length;
X: bore diameter;
Y: enlarged bore portion and gasket diameter.

## Claims

1. A sealing device (10) for bores, in particular bores (12) obtained on a header portion (14) of a heat exchanger, the sealing device (10) comprising:
- at least one bolt-type plug (16), which is provided with a head (18) and with a substantially cylindrical shank (20), wherein said shank (20) has a threaded cylindrical surface (22) which is substantially parallel to a central rotation axis (A) of said plug (16) and wherein said plug (16) is designed to be inserted into a corresponding bore (12) in a threaded coupling; and
- at least one annular gasket (24), which is provided with a central through hole (26) having a predefined internal diameter (B), wherein said gasket (24) is designed to be axially inserted around said shank (20) to make seal between said head (18) and said bore (12),
wherein said plug (16) is provided with at least one annular seat (28) for accommodating said gasket (24), wherein said seat (28) is arranged at a root connection between said head (18) and said shank (20), and wherein said seat (28) comprises:
- a radial annular contact surface (30) which is substantially flat in the radial direction, which is obtained on a portion of said head (18) facing said shank (20) and which is substantially perpendicular to said central rotation axis (A), wherein said radial annular contact surface (30) is designed to be in contact with a radially oriented annular contact portion (32) of said gasket (24); and
- an axial annular contact surface (34) which is substantially flat in the axial direction, which is obtained on a root portion of said shank (20) at said radial annular contact surface (30) and which is substantially parallel to said central rotation axis (A), wherein said axial annular contact surface (34) has an internal diameter (C) which is substantially equal to the internal diameter (B) of said central through hole (26), and wherein said axial annular contact surface (34) is designed to form an axial centering shoulder for said gasket (24),
wherein said axial annular contact surface (34) is provided with at least one circumferential groove (38) having an internal diameter (D) which is smaller than the internal diameter (C) of said axial annular contact surface (34),
the sealing device (10) being **characterized in that** said circumferential groove (38) is obtained on said axial annular contact surface (34) at a joining portion (40) between said radial annular contact surface (30) and said axial annular contact surface (34).

2. The sealing device (10) according to claim 1, **characterized in that** said circumferential groove (38) has a curve-shaped concave cross-section profile.

3. The sealing device (10) according to claim 2, **characterized in that** said circumferential groove (38) has a semicircular concave cross-section profile.

4. The sealing device (10) according to anyone of claims 1 to 3, **characterized in that** the radial width (F) of said radial annular contact surface (30) is equal or greater than the radial width (G) of the radially oriented annular contact portion (32) of said gasket (24).

5. The sealing device (10) according to anyone of claims 1 to 4, **characterized in that** the axial thickness (H) of the inner annular surface (36) of said gasket hole (26) is greater than the axial length (K) of said circumferential groove (38).

6. The sealing device (10) according to anyone of claims 1 to 5, **characterized in that** the threaded cylindrical surface (22) of said substantially cylindrical shank (20) has an overall diameter (E) which is smaller than the internal diameter (C) of said axial annular contact surface (34).

7. The sealing device (10) according to claim 6, **characterized in that** a narrowed shank portion (42) is interposed between said threaded cylindrical surface (22) and said axial annular contact surface (34).

8. The sealing device (10) according to claim 7, **characterized in that** a frustoconical shank fitting portion (44) is interposed between said narrowed shank portion (42) and said axial annular contact surface (34).

9. The sealing device (10) according to claim 8, **characterized in that** said frustoconical shank fitting portion (44) has a smaller base which connects to said narrowed shank portion (42) and which has a smaller base diameter which is substantially equal to the overall diameter (E) of said threaded cylindrical surface (22), whereas the greater base of said frustoconical shank fitting portion (44) connects to said axial annular contact surface (34) and has a greater base diameter which is substantially equal to the internal diameter (C) of said axial annular contact surface (34).

10. The sealing device (10) according to anyone of claims 1 to 9, **characterized in that** said gasket (24) is made of a metallic material.

11. A method for assembling the sealing device (10) according to anyone of the preceding claims inside a bore (12) obtained on a header portion (14) of a heat exchanger, the method comprising the steps of:
- providing a through hole in said header portion (14), in order to obtain a bore (12) having a diameter (X) which is substantially equal to the overall diameter (E) of the threaded cylindrical surface (22) of said shank (20);
- providing an internal thread in said bore (12);
- inserting said shank (20) into the central through hole (26) of said gasket (24), in such a way that the radially oriented annular contact portion (32) of said gasket (24) comes into contact with the radial annular contact surface (30) of said annular seat (28) and the inner annular surface (36) of said hole (26) comes into contact with the axial annular contact surface (34) of said annular seat (28);
- inserting said plug (16) into said bore (12) by screwing said shank (20) into the internal thread of said bore (12), in such a way that said gasket (24) comes into contact with said header portion (14); and
- applying a tightening torque to said plug head (18), in such a way that the radially oriented annular contact portion (32) of said gasket (24) is pushed in full and sealing contact with the radial annular contact surface (30) of said annular seat (28).

12. The method according to claim 11, further comprising the step of enlarging the entrance of said bore (12), in order to obtain an enlarged bore portion (46) having a flat peripheral annular surface which is perpendicular to the bore axis and having a diameter (Y) which is substantially equal to, or slightly greater than, the overall diameter of said gasket (24), in such a way that said gasket (24) is fitted into said enlarged bore portion (46) when said shank (20) is screwed into the internal thread of said bore (12).

## Patentansprüche

1. Abdichtungsvorrichtung (10) für Bohrungen, insbesondere Bohrungen (12), die an einem Sammlerabschnitt (14) eines Wärmetauschers erhalten werden, wobei die Abdichtungsvorrichtung (10) Folgendes umfasst:
- mindestens einen bolzenartigen Stopfen (16), der mit einem Kopf (18) und mit einem im Wesentlichen zylindrischen Schaft (20) versehen ist, wobei der Schaft (20) eine mit Gewinde versehene zylindrische Oberfläche (22) aufweist, die im Wesentlichen parallel zu einer zentralen Rotationsachse (A) des Stopfens (16) ist, und wobei der Stopfen (16) dafür gestaltet ist, in eine entsprechende Bohrung (12) in einer Gewindekupplung eingesetzt zu werden; und
- mindestens eine ringförmige Dichtung (24), die mit einem mittigen Durchgangsloch (26) versehen ist, das einen vordefinierten Innendurchmesser (B) aufweist, wobei die Dichtung (24) dafür gestaltet ist, in Axialrichtung um den Schaft (20) eingesetzt zu werden, um eine Abdichtung zwischen dem Kopf (18) und der Bohrung (12) herzustellen,
wobei der Stopfen (16) mit mindestens einem ringförmigen Sitz (28) zum Aufnehmen der Dichtung (24) versehen ist, wobei der Sitz (28) an einer Fußverbindung zwischen dem Kopf (18) und dem Schaft (20) angeordnet ist, und wobei der Sitz (28) Folgendes umfasst:
- eine radiale ringförmige Kontaktfläche (30), die in der radialen Richtung im Wesentlichen flach ist, die an einem Abschnitt des Kopfes (18) erhalten wird, der dem Schaft (20) zugewandt ist, und die im Wesentlichen senkrecht zu der zentralen Rotationsachse (A) ist, wobei die radiale ringförmige Kontaktfläche (30) dafür gestaltet ist, sich in Kontakt mit einem radial ausgerichteten ringförmigen Kontaktabschnitt (32) der Dichtung (24) zu befinden; und
- eine axiale ringförmige Kontaktfläche (34), die in der axialen Richtung im Wesentlichen flach ist, die an einem Fußabschnitt des Schafts (20) an der radialen ringförmigen Kontaktfläche (30) erhalten wird und die im Wesentlichen parallel zu der zentralen Rotationsachse (A) ist, wobei die axiale ringförmige Kontaktfläche (34) einen Innendurchmesser (C) aufweist, der im Wesentlichen gleich dem Innendurchmesser (B) des mittigen Durchgangslochs (26) ist, und wobei die axiale ringförmige Kontaktfläche (34) dafür gestaltet ist, einen axialen Zentrierungsabsatz für die Dichtung (24) zu bilden,
wobei die axiale ringförmige Kontaktfläche (34) mit mindestens einer umlaufenden Rille (38) versehen ist, die einen Innendurchmesser (D) aufweist, der kleiner als der Innendurchmesser (C) der axialen ringförmigen Kontaktfläche (34) ist,
wobei die Abdichtungsvorrichtung (10) **dadurch gekennzeichnet ist, dass** die umlaufende Rille (38) an der axialen ringförmigen Kontaktfläche (34) an einem Verbindungsabschnitt (40) zwischen der radialen ringförmigen Kontaktfläche (30) und der axialen ringförmigen Kontaktfläche (34) erhalten wird.

2. Abdichtungsvorrichtung (10) nach Anspruch 1, **dadurch gekennzeichnet, dass** die umlaufende Rille (38) ein kurvenförmiges konkaves Querschnittsprofil aufweist.

3. Abdichtungsvorrichtung (10) nach Anspruch 2, **dadurch gekennzeichnet, dass** die umlaufende Rille (38) ein halbkreisförmiges konkaves Querschnittsprofil aufweist.

4. Abdichtungsvorrichtung (10) nach einem der Ansprüche 1 bis 3, **dadurch gekennzeichnet, dass** die radiale Breite (F) der radialen ringförmigen Kontaktfläche (30) gleich der radialen Breite (G) des radial ausgerichteten ringförmigen Kontaktabschnitts (32) der Dichtung (24) oder größer als dieselbe ist.

5. Abdichtungsvorrichtung (10) nach einem der Ansprüche 1 bis 4, **dadurch gekennzeichnet, dass** die axiale Dicke (H) der inneren ringförmigen Oberfläche (36) des Dichtungslochs (26) größer als die axiale Länge (K) der umlaufenden Rille (38) ist.

6. Abdichtungsvorrichtung (10) nach einem der Ansprüche 1 bis 5, **dadurch gekennzeichnet, dass** die mit Gewinde versehene zylindrische Oberfläche (22) des im Wesentlichen zylindrischen Schafts (20) einen Gesamtdurchmesser (E) aufweist, der kleiner als der Innendurchmesser (C) der axialen ringförmigen Kontaktfläche (34) ist.

7. Abdichtungsvorrichtung (10) nach Anspruch 6, **dadurch gekennzeichnet, dass** ein verengter Schaftabschnitt (42) zwischen der mit Gewinde versehenen zylindrischen Oberfläche (22) und der axialen ringförmigen Kontaktfläche (34) eingefügt ist.

8. Abdichtungsvorrichtung (10) nach Anspruch 7, **dadurch gekennzeichnet, dass** ein kegelstumpfförmiger Schaftpassabschnitt (44) zwischen dem verengten Schaftabschnitt (42) und der axialen ringförmigen Kontaktfläche (34) eingefügt ist.

9. Abdichtungsvorrichtung (10) nach Anspruch 8, **dadurch gekennzeichnet, dass** der kegelstumpfförmige Schaftpassabschnitt (44) eine kleinere Basis aufweist, die sich mit dem verengten Schaftabschnitt (42) verbindet und die einen kleinere Basisdurchmesser aufweist, der im Wesentlichen gleich dem Gesamtdurchmesser (E) der mit Gewinde versehenen zylindrischen Oberfläche (22) ist, wohingegen sich die größere Basis des kegelstumpfförmigen Schaftpassabschnitts (44) mit der axialen ringförmigen Kontaktfläche (34) verbindet und einen größeren Basisdurchmesser aufweist, der im Wesentlichen gleich dem Innendurchmesser (C) der axialen ringförmigen Kontaktfläche (34) ist.

10. Abdichtungsvorrichtung (10) nach einem der Ansprüche 1 bis 9, **dadurch gekennzeichnet, dass** die Dichtung (24) aus einem metallischen Werkstoff besteht.

11. Verfahren zum Zusammensetzen der Abdichtungsvorrichtung (10) nach einem der vorhergehenden Ansprüche innerhalb einer Bohrung (12), die an einem Sammlerabschnitt (14) eines Wärmetauschers erhalten wird, wobei das Verfahren die folgenden Schritte umfasst:
- Bereitstellen eines Durchgangslochs in dem Sammlerabschnitt (14), um eine Bohrung (12) zu erhalten, die einen Durchmesser (X) aufweist, der im Wesentlichen gleich dem Gesamtdurchmesser (E) der mit Gewinde versehenen zylindrischen Oberfläche (22) des Schafts (20) ist;
- Bereitstellen eines Innengewindes in der Bohrung (12);
- Einsetzen des Schafts (20) in das mittige Durchgangsloch (26) der Dichtung (24), auf eine solche Weise, dass der radial ausgerichtete ringförmige Kontaktabschnitt (32) der Dichtung (24) in Kontakt mit der radialen ringförmigen Kontaktfläche (30) des ringförmigen Sitzes (28) kommt und die innere ringförmige Oberfläche (36) des Lochs (26) in Kontakt mit der axialen ringförmigen Kontaktfläche (34) des ringförmigen Sitzes (28) kommt;
- Einsetzen des Stopfens (16) in die Bohrung (12) durch Schrauben des Schafts (20) in das Innengewinde der Bohrung (12), auf eine solche Weise, dass die Dichtung (24) in Kontakt mit dem Sammlerabschnitt (14) kommt; und
- Anwenden eines Anzugsdrehmoments auf den Stopfenkopf (18), auf eine solche Weise, dass der radial ausgerichtete ringförmige Kontaktabschnitt (32) der Dichtung (24) in vollständigen und abdichtenden Kontakt mit der radialen ringförmigen Kontaktfläche (30) des ringförmigen Sitzes (28) gedrückt wird.

12. Verfahren nach Anspruch 11, das ferner den Schritt des Vergrößerns des Eingangs der Bohrung (12) umfasst, um einen vergrößerten Bohrungsabschnitt (46) zu erhalten, der eine flache ringförmige Umfangsfläche aufweist, die senkrecht zu der Bohrungsachse ist und einen Durchmesser (Y) aufweist, der im Wesentlichen gleich dem Gesamtdurchmesser der Dichtung (24) oder geringfügig größer als derselbe ist, auf eine solche Weise, dass die Dichtung (24) in den vergrößerten Bohrungsabschnitt (46) gepasst wird, wenn der Schaft (20) in das Innengewinde der Bohrung (12) geschraubt wird.

## Revendications

1. Dispositif d'étanchéité (10) pour des alésages, en particulier des alésages (12) obtenus sur une partie de collecteur (14) d'un échangeur de chaleur, le dispositif d'étanchéité (10) comprenant :
au moins un bouchon de type boulon (16) qui est doté d'une tête (18) et d'une tige sensiblement cylindrique (20), dans lequel ladite tige (20) comporte une surface cylindrique filetée (22) qui est sensiblement parallèle à un axe de rotation central (A) dudit bouchon (16), et dans lequel ledit bouchon (16) est conçu pour être inséré dans un alésage correspondant (12) dans un raccord fileté ; et
au moins un joint d'étanchéité annulaire (24) qui est doté d'un trou traversant central (26) ayant un diamètre intérieur prédéfini (B), dans lequel ledit joint d'étanchéité (24) est conçu pour être inséré axialement autour de ladite tige (20) pour établir un joint entre ladite tête (18) et ledit alésage (12),
dans lequel ledit bouchon (16) est doté d'au moins un siège annulaire (28) pour loger ledit joint d'étanchéité (24), dans lequel ledit siège (28) est agencé au niveau d'une connexion de base entre ladite tête (18) et ladite tige (20), et dans lequel ledit siège (28) comprend :
une surface de contact annulaire radiale (30) qui est sensiblement plate dans la direction radiale, qui est obtenue sur une partie de ladite tête (18) faisant face à ladite tige (20), et qui est sensiblement perpendiculaire audit axe de rotation central (A), dans lequel ladite surface de contact annulaire radiale (30) est conçue pour être en contact avec une partie de contact annulaire à orientation radiale (32) dudit joint d'étanchéité (24) ; et
une surface de contact annulaire axiale (34) qui est sensiblement plate dans la direction axiale, qui est obtenue sur une partie de base de ladite tige (20) au niveau de ladite surface de contact annulaire radiale (30), et qui est sensiblement parallèle audit axe de rotation central (A), dans lequel ladite surface de contact annulaire axiale (34) a un diamètre intérieur (C) qui est sensiblement égal au diamètre intérieur (B) dudit trou traversant central (26), et dans lequel ladite surface de contact annulaire axiale (34) est conçue pour former un épaulement de centrage axial pour ledit joint d'étanchéité (24),
dans lequel ladite surface de contact annulaire axiale (34) est dotée d'au moins une rainure circonférentielle (38) ayant un diamètre intérieur (D) qui est inférieur au diamètre intérieur (C) de ladite surface de contact annulaire axiale (34),
le dispositif d'étanchéité (10) étant **caractérisé en ce que** ladite rainure circonférentielle (38) est obtenue sur ladite surface de contact annulaire axiale (34) au niveau d'une partie de jonction (40) entre ladite surface de contact annulaire radiale (30) et ladite surface de contact annulaire axiale (34).

2. Dispositif d'étanchéité (10) selon la revendication 1, **caractérisé en ce que** ladite rainure circonférentielle (38) a un profil de section transversale concave en forme de courbe.

3. Dispositif d'étanchéité (10) selon la revendication 2, **caractérisé en ce que** ladite rainure circonférentielle (38) a un profil de section transversale concave semi-circulaire.

4. Dispositif d'étanchéité (10) selon l'une quelconque des revendications 1 à 3, **caractérisé en ce que** la largeur radiale (F) de ladite surface de contact annulaire radiale (30) est égale ou supérieure à la largeur radiale (G) de la partie de contact annulaire à orientation radiale (32) dudit joint d'étanchéité (24).

5. Dispositif d'étanchéité (10) selon l'une quelconque des revendications 1 à 4, **caractérisé en ce que** l'épaisseur axiale (H) de la surface annulaire interne (36) dudit trou de joint étanchéité (26) est supérieure à la longueur axiale (K) de ladite rainure circonférentielle (38).

6. Dispositif d'étanchéité (10) selon l'une quelconque des revendications 1 à 5, **caractérisé en ce que** la surface cylindrique filetée (22) de ladite tige sensiblement cylindrique (20) a un diamètre global (E) qui est inférieur au diamètre intérieur (C) de ladite surface de contact annulaire axiale (34).

7. Dispositif d'étanchéité (10) selon la revendication 6, **caractérisé en ce qu'**une partie de tige rétrécie (42) est interposée entre ladite surface cylindrique filetée (22) et ladite surface de contact annulaire axiale (34).

8. Dispositif d'étanchéité (10) selon la revendication 7, **caractérisé en ce qu'**une partie d'ajustement de tige tronconique (44) est interposée entre ladite partie de tige rétrécie (42) et ladite surface de contact annulaire axiale (34).

9. Dispositif d'étanchéité (10) selon la revendication 8, **caractérisé en ce que** ladite partie d'ajustement de tige tronconique (44) comporte une base plus petite qui est connectée à ladite partie de tige rétrécie (42) et qui a un diamètre de base plus petit qui est sensiblement égal au diamètre global (E) de ladite surface cylindrique filetée (22), tandis que la base plus grande de ladite partie d'ajustement de tige tronconique (44) est connectée à ladite surface de contact annulaire axiale (34) et a un diamètre de base plus grand qui est sensiblement égal au diamètre intérieur (C) de ladite surface de contact annulaire axiale (34).

10. Dispositif d'étanchéité (10) selon l'une quelconque des revendications 1 à 9, **caractérisé en ce que** ledit joint d'étanchéité (24) est constitué d'un matériau métallique.

11. Procédé d'assemblage du dispositif d'étanchéité (10) selon l'une quelconque des revendications précédentes à l'intérieur d'un alésage (12) obtenue sur une partie de collecteur (14) d'un échangeur de chaleur, le procédé comprenant les étapes suivantes :
la fourniture d'un trou traversant dans ladite partie de collecteur (14) pour obtenir un alésage (12) ayant un diamètre (X) qui est sensiblement égal au diamètre global (E) de la surface cylindrique filetée (22) de ladite tige (20) ;
la fourniture d'un filetage intérieur dans ledit alésage (12) ;
l'insertion de ladite tige (20) dans le trou traversant central (26) dudit joint d'étanchéité (24), de sorte que la partie de contact annulaire à orientation radiale (32) dudit joint d'étanchéité (24) entre en contact avec la surface de contact annulaire radiale (30) dudit siège annulaire (28) et que la surface annulaire interne (36) dudit trou (26) entre en contact avec la surface de contact annulaire axiale (34) dudit siège annulaire (28) ;
l'insertion dudit bouchon (16) dans ledit alésage (12) en vissant ladite tige (20) dans le filetage intérieur dudit alésage (12), de sorte que ledit joint d'étanchéité (24) entre en contact avec ladite partie de collecteur (14) ; et
l'application d'un couple de serrage à ladite tête de bouchon (18), de sorte que la partie de contact annulaire à orientation radiale (32) dudit joint d'étanchéité (24) est poussée en contact complet et étanche avec la surface de contact annulaire radiale (30) dudit siège annulaire (28).

12. Procédé selon la revendication 11, comprenant en outre l'étape d'élargissement de l'entrée dudit alésage (12) pour obtenir une partie d'alésage élargie (46) comportant une surface annulaire périphérique plate qui est perpendiculaire à l'axe d'alésage, et ayant un diamètre (Y) qui est sensiblement égal, ou légèrement supérieur, au diamètre global dudit joint d'étanchéité (24), de sorte que ledit joint d'étanchéité (24) est ajusté dans ladite partie d'alésage élargie (46) lorsque ladite tige (20) est vissée dans le filetage intérieur dudit alésage (12).
